**Europäisches Patentamt**

**European Patent Office**

**Office européen des brevets**

(19)

(11) Veröffentlichungsnummer: **0 026 436**
**B1**

(12) **EUROPÄISCHE PATENTSCHRIFT**

(45) Veröffentlichungstag der Patentschrift:
07.09.83

(21) Anmeldenummer: 80105716.7

(22) Anmeldetag: 23.09.80

(51) Int. Cl.³: **H 04 B 3/04,** H 03 K 5/01,
H 04 L 25/20

(54) PCM-Regenerator.

(30) Priorität: 26.09.79 DE 2938965

(43) Veröffentlichungstag der Anmeldung:
08.04.81 Patentblatt 81/14

(45) Bekanntmachung des Hinweises auf die Patenterteilung:
07.09.83 Patentblatt 83/36

(84) Benannte Vertragsstaaten:
AT BE CH DE FR GB IT LI NL SE

(56) Entgegenhaltungen:
AT-B-311 423
DE-A-2 501 494
DE-B-2 407 954
DE-B-2 748 832

(73) Patentinhaber: SIEMENS AKTIENGESELLSCHAFT,
Berlin und München Wittelsbacherplatz 2,
D-8000 München 2 (DE)

(72) Erfinder: Dömer, Josef, Ing. grad., Flossgatter 18,
D-8021 Hohenschäftlarn (DE)
Erfinder: Wahl, Jakob, Ing. grad., Grüntenstrasse 13,
D-8901 Königsbrunn (DE)
Erfinder: Kahn, Klaus-Dieter, Dipl.-Ing.,
Klobensteinerstrasse 32, D-8000 München 90 (DE)

PCM-Regenerator

In der DE-B-2 407 954 ist ein PCM-Regenerator mit einem Eingangsübertrager beschrieben, der über einen, einen Signalweg für positive und einen Signalweg für negative Signale enthaltendem Amplitudenentscheider sowohl mit einem, einen Stromgenerator enthaltenden Phasendiskriminator als auch mit einem Zeitentscheider mit positiven und negativen Signalweg verbunden ist, bei dem an den Zeitentscheider ein Pulsverstärker und an diesem ein Pulsformer angeschlossen ist und bei dem an dem Phasendiskriminator nach Art einer Phasenregelschleife über ein Tiefpaßfilter ein Taktgenerator angeschlossen ist, von dessen Ausgang eine Verbindung zum Zeitentscheider und zum Phasendiskriminator besteht.

Die Anmeldung bezieht sich auf einen PCM-Regenerator, bei dem Amplitudenentscheider und der Zeitentscheider für die getrennte Verarbeitung der positiven und der negativen Teile der Eingangssignale eingerichtet sind. Der mit dem Amplitudenentscheider verbundene Phasendiskriminator enthält deshalb neben dem Eingang für das Taktsignal als Referenzsignal zwei weitere Signaleingänge für die amplitudenregenerierten Impulse der Eingangssignale. Mit diesen beiden Signaleingängen ist jeweils der Setzeingang eines D-Flip-Flops verbunden, die Q-Ausgänge der beiden D-Flip-Flops sind über Dioden miteinander und mit dem Eingang eines Stromgenerators verbunden, der einen weiteren Eingang des Phasendiskriminators darstellt. Über diese Verbindung wird dem Stromgenerator I eine Regelspannung zur Nachstellung der Frequenz des Taktgenerators durch Verändern der Spannung an der im Taktgenerator enthaltenen Kapazitätsdiode zugeführt. Das vom Taktgenerator erzeugte Sinussignal wird in einem angeschlossenen Rechteckformer in ein Rechtecksignal umgewandelt, das als Taktsignal in dem betrachteten PCM-Regenerator dient und durch dessen Zuführung zum Takteingang des Phasendiskriminators die Phasenregelschleife geschlossen wird. Derartige Phasenregelschleifen haben den Vorteil, daß die für Puls-Code-Modulation typischen Impulse durch die Schwankungen des Empfangssignals eliminiert werden. Zusätzlich ist zwischen Stromgenerator des Phasendiskriminators und Taktgenerator mit vorgeschaltetem Tiefpaßfilter eine Fangbereichseingrenzungsschaltung FE geschaltet, die in der DE-B-2 748 832 näher erläutert ist.

Bei der Übertragung von PCM-Signalen kann es zu einer Phasenmodulation der einzelnen PCM-Impulse, einem sogenannten Jitter, kommen. Überschreitet die Amplitude dieses Jittersalso der störende Phasenhub- ein bestimmtes Maß, dann können Schwierigkeiten bei der Synchronisation der Phasenregelschleife auftreten, die zum völligen Ausfall der Synchronisation führen können. Um die Synchronisation auch in solchen Fällen sicherzustellen, ist es bereits bekannt, Phasendiskriminatoren mit zusätzlichen Fangschaltungen zu versehen, wodurch allerdings der Aufwand für die Taktrückgewinnung erheblich ansteigt. Außerdem ist es aus der DE-B-2 748 832 bekannt, eine nur während des Einschwingens der Phasenregelschleife wirksame Fangbereichseingrenzung vorzunehmen, durch die der Bereich des Mittelwertes der zur Nachregelung des Taktgenerators vorgesehenen Spannung begrenzt und dadurch ein Einschwingen ermöglicht wird.

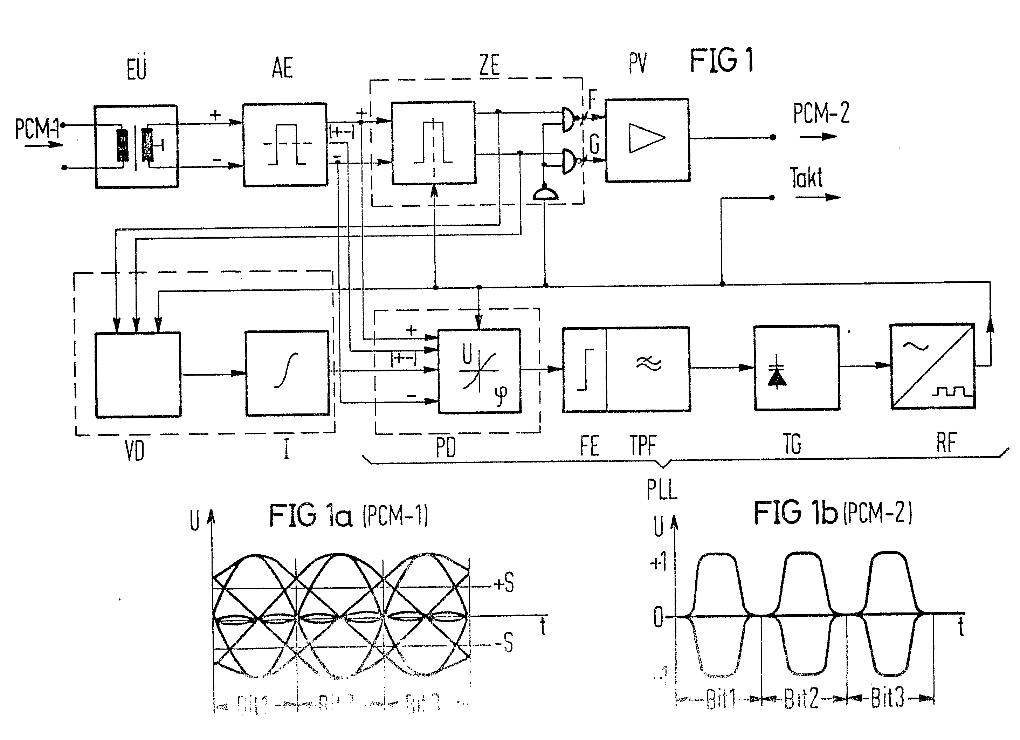

Zusätzlich kann durch eine unsymmetrische Beeinflussung des Phasendiskriminators durch die vom Zeitentscheider abgeleiteten Signale bei großen Jitterhüben eine Fehlsynchronisation auftreten. Hierzu sei auf die Fig. 1a verwiesen, die das Eingangssignal PCM 1 eines in der Fig. 1 dargestellten PCM-Regenerators in Form eines Augendiagramms zeigt. Bei einem derartigen Augendiagramm werden alle möglichen Signalverläufe übereinandergeschrieben, wobei die von Signalverläufen freien Teile des Diagramms als »Augen« bezeichnet werden. Aus der Fig. 1a ist erkenntlich, daß ein »Auge« mit maximaler Öffnung bei den vorgesehenen Signalen um die positive bzw. die negative Schwelle $+S$, $-S$ des Amplitudenentscheiders in Bit-Mitte liegt. Ein weiteres kleines »Auge« ist jeweils am Bit-Ende erkennbar.

Die vom Amplitudenentscheider amplitudenmäßig regenerierten Signale werden nach Polaritäten getrennt den beiden Eingängen des Zeitentscheiders und des Phasendiskriminators zugeführt. Durch einen großen Hub des Phasenjitters verursacht kann es nun geschehen, daß der Phasendiskriminator der Phasenregelschleife nicht auf das »Auge« in Bit-Mitte sondern auf das am Bit-Anfang bzw. Bit-Ende einrastet und dadurch von der Phasenregelschleife ein um 180° verschobenes Taktsignal erzeugt wird. Wird dieses Taktsignal dem Zeitentscheider ZE zugeführt, dann kommt es zu einer fehlerhaften zeitmäßigen Regenerierung der Impulse der Eingangssignale, da diese Impulse nicht in Impulsmitte, sondern entsprechend um $\pm 180°$ verschoben abgetastet werden. Außerdem kann beim Einschalten der Übertragungsstrecke mit den in Fig. 1a dargestellten Eingangssignalen auch die falsche Einrastung der Phasenregelschleife auftreten.

Die Aufgabe der Erfindung besteht nun darin, die Einsetzbarkeit der Regeneratoren nach der DE-B-2 407 954 in Übertragungsstrecken mit einem relativ hohen Hub des Phasenjitters durch Verhinderung von Fehlsynchronisation der Phasenregelschleife zu verbessern und die erwähnte falsche Einrastung der Phasenregelschleife beim Einschalten zu verhindern.

Erfindungsgemäß wird die Aufgabe entsprechend dem Kennzeichen des Patentanspruchs 1 gelöst.

Der Erfindung liegt dabei die Erkenntnis zugrunde, daß bei einem Einrasten der Abfrage-phase auf den falschen Arbeitspunkt derartige Bipolaritätsverletzungen, also Abweichungen von der Coderegel, in so großer Zahl auftreten, daß das Maß an Bipolaritätsverletzungen zur Korrektur der Phase des erzeugten Taktsignals verwendet werden kann. Dabei ist besonders vorteilhaft, daß eine Anpassung an unterschiedlich codierte Signale durch einfachen Austausch des Bipolaritätsdetektors leicht möglich ist.

Ein besonders wenig aufwendiger Bipolaritätsdetektor ist im Patentanspruch 2 näher erläutert.

Im Hinblick auf die über die Kabelstrecke erfolgende Fernspeisung der PCM-Regeneratoren wird ein möglichst geringer Leistungsverbrauch dieser Regeneratoren gefordert. Ein PCM-Regenerator mit einem Integrator mit sehr geringer Leistungsaufnahme wird deshalb im Patentanspruch 3 näher beschrieben.

Die Erfindung soll im folgenden anhand der Zeichnung näher erläutert werden.

In der Zeichnung zeigt

Fig. 1 das Blockschaltbild eines erfindungsge-mäßen PCM-Regenerators,

Fig. 1a das Augendiagramm des entzerrten PCM-Signals am Eingang des PCM-Regenerators nach Fig. 1 und 2,

Fig. 1b das Augendiagramm eines regenerierten PCM-Signals am Ausgang eines PCM-Regenerators nach Fig. 1 und 2 und

Fig. 2 ein detailliertes Schaltbild eines PCM-Regenerators nach der Erfindung.

Der in der Fig. 1 dargestellte PCM-Regenerator erhält Eingangssignale PCM1 von einem vorgeschalteten Entzerrer-Verstärker. Durch diesen wird der Frequenzgang des Kabels aufgehoben, so daß die PCM-Signale in sin²-Halbwellen vorliegen. Das Augendiagramm des Eingangssignals ist, wie bereits einleitend erwähnt, in der Fig. 1a mit den beiden Schwellen +S, −S des Amplitudenentscheiders dargestellt.

Der Regenerator nach der Fig. 1 enthält einen mit den Eingangsanschlüssen verbundenen Eingangsübertrager EÜ, an den ein Amplitudenentscheider AE angeschlossen ist. Im Amplituden-entscheider erfolgt eine Amplitudenregenerie-rung der Eingangsimpulse, außerdem werden diese nach Polaritäten getrennt an zwei Aus-gangsanschlüssen des Amplitudenentscheiders abgegeben. Zusätzlich ist ein dritter Ausgang des Amplitudenentscheiders vorgesehen, an dem das Summensignal beider Ausgänge ansteht. Mit den beiden Ausgängen des Amplitudenentscheiders für die nach Polaritäten getrennten Signale sind zwei Signaleingänge eines Zeitentscheiders ZE verbunden, außerdem sind die drei Ausgänge des Amplitudenentscheiders mit getrennten Eingängen des Phasendiskriminators PD der Phasenregelschleife zur Taktrückgewinnung des PCM-Regenerators verbunden.

Im Zeitentscheider ZE erfolgt die zeitmäßige Regenerierung der amplitudenregenerierten Eingangsimpulse mittels eines von der Phasenregelschleife erzeugten Taktsignals. Der Zeitentscheider enthält zwei D-Flip-Flops mit nachgeschalteten UND-Gattern, die zur getrennten Regenerierung der positiven und der negativen Eingangsimpulse dienen.

Mit den beiden Ausgängen des Zeitentscheiders für die zeitregenerierten positiven bzw. negativen Impulse sind zwei Eingänge eines nachgeschalteten Pulsverstärkers verbunden, außerdem kann im Pulsverstärker auch eine Pulsformung vorgenommen werden. Dieser Teil des PCM-Regenerators entspricht dem Regenerator nach der DE-B-2 407 954. Abweichend davon ist dem Phasendiskriminator in der Phasenregelschleife eine in der DE-B-2 748 832 bereits beschriebene Fangbereichs-Eingrenzungsschaltung FE nachgeschaltet. An diese schließt sich ein in Phasenregelschleifen übliches Tiefpaßfilter TPF an, von dem die Nach-stimmspannung an einen nachgezogenen Takt-generator TG abgegeben wird. Bei diesem handelt es sich um einen üblichen, wenigstens eine Kapazitätsdiode enthaltenden Oszillator, der eine Sinus-Schwingung mit der gewünschten Frequenz erzeugt. In einem nachgeschalteten Rechteckformer RF wird aus dieser Sinus-schwingung das gewünschte rechteckförmige Taktsignal erzeugt, das dem Zeitentscheider ZE, dem Phasendiskriminator PD, einem zusätzlichen Bipolaritätsdetektor VD zugeführt wird und über eine Ausgangsklemme nachgeschalteten Einrichtungen zur Verfügung steht.

Zusätzlich zu dem aus der DE-B-2 407 954 und der DE-B-2 748 832 bekannten Stand der Technik sind entsprechend der Erfindung ein Bipolaritätsdetektor VD und ein diesem nachgeschalte-ter Integrator I in den Regenerator eingefügt. Der Bipolaritätsdetektor VD enthält zwei Eingänge, die jeweils getrennt mit den Signalwegen für die positiven bzw. negativen Signale des Zeitentscheiders verbunden sind und über die die zeitregenerierten und amplitudenregenerierten Eingangsimpulse nach Polaritäten getrennt dem Bipolaritätsdetektor zugeführt werden. Mit dem Ausgang dieses Bipolaritätsdetektors ist der Eingang des Integrators I verbunden, dem bei jeder Verletzung der Coderegel vom Bipolaritätsdetektor VD ein Impuls zugeführt wird und der bei einer bestimmten vorher festgelegten Höhe der integrierten Spannung einen Ausgangsimpuls an den Phasendiskriminator PD abgibt.

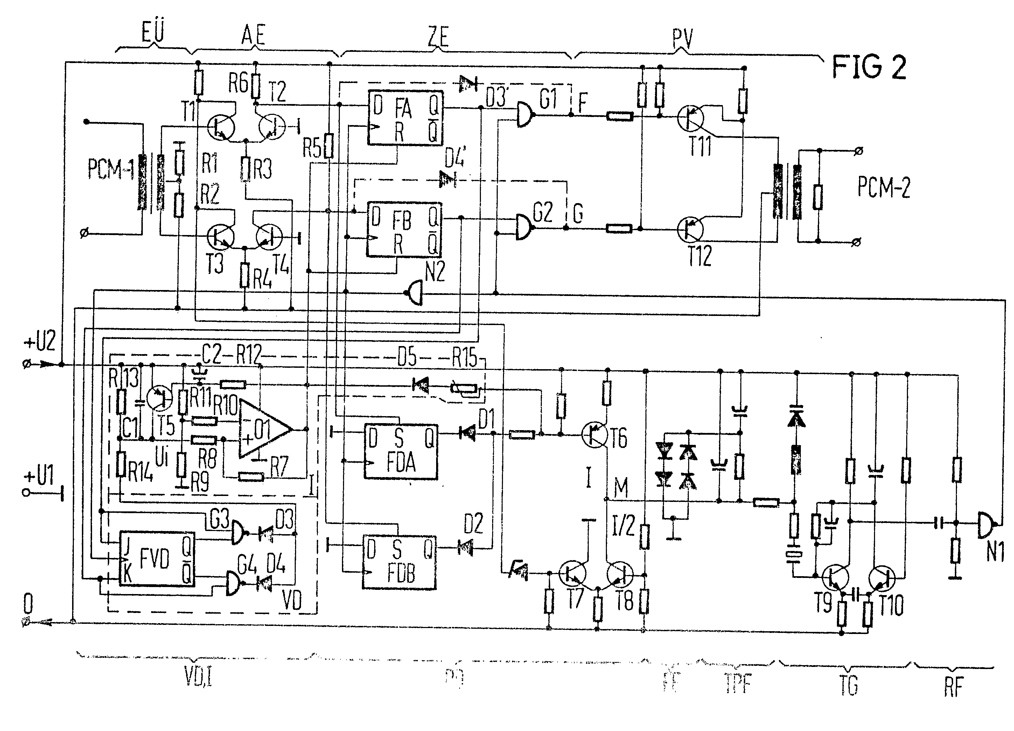

Das detaillierte Schaltbild nach der Fig. 2 umfaßt alle in der Fig. 1 dargestellten Teile. Eingangsseitig ist zunächst wieder der Eingangs-übertrager EÜ dargestellt, mit dessen äußeren Anschlüssen der Sekundärwicklung jeweils ein emittergekoppelter Differenzverstärker verbunden ist, der durch seine Vorspannung als Amplitudenentscheider wirkt. Der eine Aus-gangsanschluß jedes der beiden Differenzver-stärker ist mit einem D-Eingang eines D-Flip-Flops FA, FB im Zeitentscheider ZE verbunden. Der andere Ausgang der beiden emitter-gekop-pelten Differenzverstärker des Amplitudenent-scheiders AE ist mit einem Eingang des Phasendiskriminators PD verbunden, diese Verbindung dient zur Übertragung des Summensignals vom Amplitudenentscheider zum Phasendiskriminator. Die Q-Ausgänge der D-Flip-Flop des Zeitentscheiders sind über zwei UND-Gatter G1, G2 mit dem als Gegentaktverstärker aufgebauten Pulsverstärker PV verbunden, über einen Ausgangsübertrager werden die amplituden- und zeitmäßig regenerierten Impulse an den Ausgang des Regenerators abgegeben.

Auch die Phasenregelschleife mit dem Phasendiskriminator PD, dem Tiefpaßfilter TPF, dem Taktgenerator TG und dem Rechteckformer RF entspricht weitgehend der Phasenregelschleife des Regenerators der DE-B-2 407 954. Der Phasendiskriminator PD enthält zwei weitere getaktete D-Flip-Flop, deren D-Eingänge mit Bezugspotential und deren Setzeingänge jeweils getrennt mit einem Ausgang des Amplitudenentscheiders AE verbunden sind.

Zur Erläuterung der Wirkungsweise des Phasendiskriminators in Verbindung mit dem Zeitentscheider sei auf die Spalten 6 und 7 der DE-B-2 407 954 verwiesen, in denen die Funktion ausführlich geschildert ist.

An den Phasendiskriminator PD schließt sich die Fangbereichseingrenzungsschaltung FE an. Durch diese Schaltung wird bewirkt, daß die Regelspannung für den Taktgenerator während des Nachstimmvorganges, also während des Einschwingens des Regelkreises, in einem vorgegebenen Spannungsbereich bleibt. Mit der Fangbereichseingrenzungsschaltung ist über das Tiefpaßfilter TPF der mit einem Quarz bestückte Taktgenerator TG verbunden. Die vom Quarzoszillator erzeugte Sinus-Schwingung wird in dem als Rechteckformer betriebenen Inverter N1 in das gewünschte rechteckförmige Taktsignal umgeformt.

In der DE-B-2 407 954 sind zusätzlich im Zeitentscheider die sogenannten Rückschaltungsdioden D3, D4 vorgesehen, die mit dem D-Eingang der D-Flip-Flops FA bzw. FB und den Zeitentscheiderausgängen F bzw. G verbunden sind. Diese in Fig. 2 gestrichelt gezeichneten und mit D3' bzw. D4' bezeichneten Rückschaltungsdioden sind im PCM-Regenerator nach der Erfindung durch den Bipolaritätsdetektor VD mit nachgeschaltetem Integrator I ersetzt. Zu diesem Zweck sind mit den Q-Ausgängen der Zeitentscheider-Flip-Flops FA bzw. FB jeweils getrennt der J- und der K-Eingang eines J-K-Flip-Flops FVD verbunden, der Anschluß könnte aber auch an die Ausgangsanschlüsse des Zeitentscheiders, also an die Punkte F, G erfolgen. Mit dem Q-Ausgang des J-K-Flip-Flops FVD ist der eine Eingang eines UND-Gatters G3 verbunden, dessen anderer Eingang mit dem J-Eingang des J-K-Flip-Flops verbunden ist. Mit dem Q-Ausgang des J-K-Flip-Flops ist der eine Eingang eines UND-Gatters G4 verbunden, dessen anderer Eingang mit dem K-Eingang des J-K-Flip-Flops verbunden ist. Die Ausgänge der UND-Gatter G3, G4 sind jeweils über eine Diode D3 bzw. D4 miteinander und mit dem Eingang des nachgeschalteten Integrators I verbunden. Der beschriebene Bipolaritätsdetektor dient zur Erkennung von Abweichungen von der Regel des AMI-Codes Bei diesem Code ist entsprechend der Bezeichnung »alternate mark inversion« vorgeschrieben, daß aufeinanderfolgende Eins-Bits mit alternierender Polarität übertragen werden. Beim Auftreten von aufeinanderfolgenden Eins-Bits gleicher Polarität erhält entweder der J-Eingang oder der K-Eingang des J-K-Flip-Flops aufeinanderfolgende Impulse, ohne daß zwischendurch jeweils der andere Eingang einen Impuls aufnehmen kann. Dadurch kann das J-K-Flip-Flop jeweils beim zweiten Impuls nicht umschalten, über die UND-Gatter G3 bzw. G4 gelangen deshalb die entsprechenden Impulse an die Dioden D3 bzw. G4. Jede Verletzung der AMI-Coderegel erzeugt dadurch am Ausgang des Bipolaritätsdetektors VD einen negativen Impuls, der über einen Widerstand R14 in den Integrator I eingekoppelt wird.

Der Integrator I enthält ein aus einem Widerstand R13, dem Widerstand R14 und einem ersten Kondensator C1 gebildetes Integrierglied. Mit diesem Integrierglied ist über einen Widerstand R8 der Eingang für positive Signale eines Operationsverstärkers O1 verbunden, dessen Eingang für negative Signale über einen Widerstand R10 mit einem aus Widerständen R11 und R9 gebildeten und mit Betriebsspannung verbundenen Basisspannungsteiler angeschlossen ist. Bei Überschreiten einer bestimmten Impulsdichte erreicht die Spannung $U_i$ im Integrierglied einen Wert, der negativer als der mittels des Spannungsteilers eingestellte Vergleichswert des Operationsverstärkers ist. Dadurch schaltet der Operationsverstärker um und gibt über seinen Ausgang an eine aus einer Diode D5 und einem Widerstand R15 gebildete Serienschaltung einen Impuls ab, der von der Serienschaltung an einen Eingang des Phasendiskriminators abgegeben wird.

Zusätzlich enthält der Integrator noch einen Transistor T5, dessen Kollektoranschluß mit der Verbindung aus dem Widerstand R13 und dem Kondensator C1, dessen Emitteranschluß mit Betriebsspannung und dessen Basisanschluß über einen zweiten Kondensator C2 mit Betriebsspannung und über einen Widerstand R12 mit dem Ausgang des Operationsverstärkers verbunden ist. Durch diesen Schaltungsteil wird die Dauer des vom Operationsverstärker abgegebenen Impulses bestimmt, während mit dem Widerstand R15 die Amplitude des abgegebenen Impulses eingestellt werden kann. Durch einen Widerstand R7, der den Eingang für positive Signale des Operationsverstärkers mit dessen Ausgang verbindet, wird ein Flattern während des Umschaltvorganges verhindert, dieser Widerstand dient also als Hysteresis-Widerstand. Die Breite und die Amplitude des vom Operationsverstärker abgegebenen Impulses sind so eingestellt, daß während der Dauer des Impulses eine Phasenverschiebung des

.aktes um etwa ein halbes Bit erfolgt. Dadurch .vird der Taktgenerator veranlaßt, von der falschen Abfragephase am Bitanfang bzw. am Bitende in die Mitte der Bits des Empfangssignals einzurasten. Außerdem ist mit dem Ausgang des Operationsverstärkers der Rücksetzeingang der beiden D-Flip-Flops des Zeitentscheiders ZE verbunden. Dadurch wird sichergestellt, daß bei einem Verschieben der Taktphase vom Zeitentscheider kein Impuls vom Bipolaritätsdetektor VD abgegeben wird.

**Patentansprüche**

1. PCM-Regenerator mit einem Eingangsübertrager (EÜ), der über einen, einen Signalweg für positive und einen Signalweg für negative Signale enthaltenden Amplitudenentscheider (AE) sowohl mit einem, einen Stromgenerator enthaltenden Phasendiskriminator (PD) als auch mit einem Zeitentscheider (ZE) mit positivem und negativem Signalweg verbunden ist, bei dem an dem Zeitentscheider (ZE) ein Pulsverstärker (PV) und an diesen ein Pulsformer angeschlossen ist und bei dem an den Phasendiskriminator (PD) nach Art einer Phasenregelschleife über ein Tiefpaßfilter (TPF) ein Taktgenerator (TG) angeschlossen ist, von dessen Ausgang eine Verbindung zum Zeitentscheider und zum Phasendiskriminator besteht, dadurch gekennzeichnet, daß zur Regeneration bipolarer Signale, deren Coderegel nur eine begrenzte Anzahl n an unmittelbar aufeinander folgenden gleichpolaren Codewerten zuläßt, ein Bipolaritätsdetektor (VD) als eine Einrichtung zur Erkennung von Bipolaritätsverletzungen mit nachgeschaltetem Integrator (I) vorgesehen ist und daß der Ausgang des Integrators (I) mit einem Eingang des Phasendiskriminators (PD) derart verbunden ist, daß bei Überschreiten einer vorbestimmten Anzahl von Bipolaritätsverletzungen eine Phasenverschiebung des Taktes um etwa ein halbes Bit erfolgt.

2. PCM-Regenerator nach Patentanspruch 1, dadurch gekennzeichnet, daß der Bipolaritätsdetektor zur Regeneration bipolarer Signale ein J-K-Flip-Flop (FVD) enthält, dessen J- und dessen K-Eingang jeweils getrennt mit einem der beiden Signalwege im Zeitentscheider (ZE) verbunden ist, dessen Takteingang mit einem Taktanschluß im Zeitentscheider (ZE) verbunden ist, dessen Q-Ausgang mit dem einen Anschluß eines ersten UND-Gatters (G3) verbunden ist, dessen J-Eingang mit dem anderen Eingang dieses ersten UND-Gatters (G3) verbunden ist, dessen Q̄-Ausgang mit einem Eingang eines weiteren UND-Gatters (G4) und dessen K-Eingang mit dem zweiten Eingang des weiteren UND-Gatters (G4) verbunden ist, und daß die Ausgänge der beiden UND-Gatter (G3, G4) über zwei Dioden (D3, D4) miteinander und mit dem Eingang des nachgeschalteten Integrators (I) verbunden sind.

3. PCM-Regenerator nach Patentanspruch 1 oder 2, dadurch gekennzeichnet, daß der Integrator (I) eine Schaltungsanordnung mit einem Operationsverstärker (O1) enthält, bei der der Eingang für positive Signale des Operationsverstärkers über einen ersten Widerstand (R7) mit dem Ausgang des Operationsverstärkers (O1) und mit Rücksetzeingängen von zwei im Zeitentscheider (ZE) enthaltenen D-Flip-Flops (FA, FB) verbunden ist, bei der der Eingang für positive Signale des Operationsverstärkers (O1) über einen zweiten Widerstand (R8) mit dem Kollektoranschluß eines PNP-Transistors (T5), mit dem einen Anschluß eines ersten Kondensators (C1), über einen dritten Widerstand (R13) mit der Betriebsspannungsquelle (+U2) und über einen vierten Widerstand (R14) mit dem Integrator-Eingang verbunden ist, bei der der Eingang für negative Signale des Operationsverstärkers (O1) über einen fünften Widerstand (R10) mit einem sechsten Widerstand (R9) verbunden ist, dessen anderer Anschluß mit Bezugspotential verbunden ist, bei dem der fünfte Widerstand (R10) zusätzlich mit einem Anschluß eines siebten Widerstandes (R11) verbunden ist, dessen anderer Anschluß mit der Betriebsspannungsquelle (+U2) verbunden ist, bei dem der Emitteranschluß des PNP-Transistors (T5) mit der Betriebsspannungsquelle (+U2) und der Basisanschluß dieses Transistors über einen zweiten Kondensator (C2) mit der Betriebsspannungsquelle (+U2) und über einen achten Widerstand (R12) mit dem Ausgang des Operationsverstärkers (O1) verbunden ist, bei dem der Ausgang des Operationsverstärkers (O1) über eine Reihenschaltung aus einer Diode (D5) und einem neunten Widerstand (R15) mit dem Eingang des Phasendiskriminators (PD) verbunden ist, bei dem der Betriebsspannungsanschluß des Operationsverstärkers mit der Betriebsspannungsquelle (+U2) und der Masseanschluß des Operationsverstärkers mit dem Bezugspotential verbunden ist.

**Claims**

1. A PCM re-generator having an input transformer (EÜ) which is connected, via an amplitude decision device (AE) containing a signal path for positive signals and a signal path for negative signals, both to a phase discriminator (PD) which contains a current generator and to a time decision device (ZE) which contains positive and negative signal paths, wherein the time decision device (ZE) is connected to a pulse amplifier (PV) which latter is connected to a pulse shaper, and wherein the phase discriminator (PD) is connected in the manner of a phase control loop across a low-pass filter (TPF) to a clock pulse generator (TG) whose output has connections to the time decision device and to the phase discriminator, characterised in that for the re-generation of bipolar signals whose code regulation permits only a limited number n of directly consecutive code values of indentical polarity, a bipolarity detector (VD) which serves to detect bipolarity infringements is provided with a following integrator (1), and that the output of the integrator (1) is connected to an input of the phase discriminator (PD) in such manner that when a specific number of bipolarity infringements is exceeded the clock pulse train is displaced in phase by approximately half a bit.

2. A PCM re-generator as claimed in Claim 1, characterised in that the bipolarity detector which serves to re-generate bipolar signals contains a J-K flip-flop (FVD) whose J and K inputs are each separately connected to one of the two signal paths in the time decision device (ZE), whose clock pulse input is connected to a clock pulse terminal in the time decision device (ZE), whose Q-output is connected to one terminal of a first AND gate (G3), whose J-input is connected to the other input of this first AND-gate (G3), whose $\overline{Q}$-output is connected to an input of a further AND-gate (G4) and whose K-input is connected to the second input of the further AND-gate (G4), and that the outputs of the two AND-gates (G3, G4) are connected to one another and to the input of the following integrator (1) via two diodes (D3, D4).

3. A PCM re-generator as claimed in Claims 1 or 2, characterised in that the integrator (1) contains a circuit arrangement which possesses an operational amplifier (O1), where the positive signal input of the operational amplifier is connected via a first resistor (R7) to the output of the operational amplifier (O1) and to reset inputs of two D-type flip-flops (FA, FB) contained in the time decision device (ZE), where the positive signal input of the operational amplifier (O1) is connected via a second resistor (R8) to the collector electrode of a PNP transistor (T5), to the first terminal of a first capacitor (C1), via a third resistor (R13) to the operating voltage source (+U2) and via a fourth resistor (R14) to the integrator input, where the negative signal input of the operational amplifier (O1) is connected via a fifth resistor (R10) to a sixth resistor (R9) whose other terminal is connected to reference potential, where the fifth resistor (R10) is additionally connected to a terminal of a seventh resistor (R11) whose other terminal is connected to the operating voltage source (+U2), where the emitter electrode of the PNP transistor (T5) is connected to the operating voltage source (+U2) and the base electrode of this transistor is connected via a second capacitor (C2) to the operating voltage source (+U2) and via an eighth resistor (R12) to the output of the operational amplifier (O1), where the output of the operational amplifier (O1) is connected via a series arrangement consisting of a diode (D5) and a ninth resistor (R15) to the input of the phase discriminator (PD), where the operating voltage terminal of the operational amplifier is connected to the operating voltage source (+U2) and the earth terminal of the operational amplifier is connected to the reference potential.

## Revendications

1. Régénérateur PCM avec un translateur d'entrée (EÜ) qui est relié, par l'intermédiaire d'un discriminateur d'amplitude (AE) contenant une voie de signaux pour des signaux positifs et une voie de signaux pour des signaux négatifs, aussi bien à un discriminateur de phase (PD) contenant un générateur de courant qu'à un discriminateur de temps (ZE) à voie de signaux positive et négative, dans lequel au discriminateur de temps (ZE) est relié un amplificateur d'impulsions (PV) et à celui-ci un formateur d'impulsions, et dans lequel au discriminateur de phase (PD) est relié, à la manière d'une boucle de réglage de la phase et par l'intermédiaire d'un filtre passe-bas (TPF), un générateur de cadence à partir de la sortie duquel existe une liaison avec le discriminateur de temps et le discriminateur de phase, caractérisé par le fait que pour la régénération de signaux bipolaires, dont la règle de code n'autorise qu'un nombre limité n de valeurs de code équipolaires qui se succèdent directement, il est prévu un détecteur de bipolarité (VD), avec intégrateur aval (I), comme dispositif pour indentifier des violations de bipolarité, et que la sortie de l'intégrateur (I) est reliée de telle manière à l'entrée du discriminateur de phase (PD) qu'au dépassement d'un nombre prédéterminé de violation de bipolarité a lieu un déphasage de la cadence d'environ un demibit.

2. Régénérateur PCM selon la revendication 1, caractérisé par le fait que le détecteur de bipolarité comporte pour la régénération de signaux bipolaires un multivibrateur bistable J-K (FVD), dont l'entrée J et dont l'entrée K sont respectivement et séparément reliées avec l'une des deux voies de signaux du discriminateur de temps (ZE), dont l'entrée de cadence est reliée à une borne de cadence du discriminateur de temps (ZE) dont l'entrée Q est reliée à une borne d'un premier circuit ET (G3), dont l'entrée J est reliée à l'autre entrée de ce premier circuit ET (G3), dont la sortie $\overline{Q}$ est reliée à une entrée d'un second circuit ET (G4) et dont l'entrée K est reliée à la seconde entrée du second circuit ET (G4), et que les sorties des deux circuits ET (G3, G4) sont reliées, par l'intermédiaire de deux diodes (D3, D4), entre eux et avec l'entrée de l'intégrateur aval (I).

3. Régénérateur PCM selon la revendication 1 ou 2, caractérisé par le fait que l'intégrateur (I) comporte un montage avec un amplificateur opérationnel (O1) dans lequel l'entrée de l'amplificateur opérationnel pour les signaux positifs est reliée, par l'intermédiaire d'une première résistance (R7) avec la sortie de l'amplificateur opérationnel (O1) et avec des entrées de remise à l'état initial de deux multivibrateurs bistables D (FA, FB) contenus dans le discriminateur de temps (ZE), dans lequel l'entrée de l'amplificateur opérationnel (O1) pour les signaux positifs est reliée par l'intermédiaire d'une seconde résistance (R8) avec la borne de collecteur d'un transistor PNP (T5), à une borne d'un premier condensateur (C1), par l'intermédiaire d'une troisième résistance (R13) à la source de tension de fonctionnement (+U2) et par l'intermédiaire d'une quatrième résistance (R14) à l'entrée de l'intégrateur, dans lequel l'entrée de l'amplificateur opérationnel (O1) pour les signaux négatifs est reliée par l'intermédiaire d'une cinquième résistance (R10) à une sixième résistance (R9), dont l'autre borne est reliée au potentiel de référence, dans lequel la cinquième résistance (R10) est, de plus, reliée à une borne d'une septième résistance (R11), dont l'autre borne est reliée à la source de tension de service (+U2), dans lequel la borne d'émetteur du transistor PNP (T5) et la borne de base de ce transistor sont reliées par l'intermédiaire d'un second condensateur (C2) à la source de tension de service (+U2) et, par l'intermédiaire d'une huitième résistance (R12), à la sortie de l'amplificateur opérationnel (O1), dans lequel la sortie de l'amplificateur opérationnel (O1) est reliée, par l'intermédiaire d'un circuit série constitué par une diode (D5) et par une neuvième résistance (R15), à l'entrée du discriminateur de phase (PD), dans lequel la borne de la tension de service de l'amplificateur opérationnel est reliée à la source de tension de service (+U2) et la borne de masse de l'amplificateur opérationnel est reliée au potentiel de référence.

FIG 1

EÜ   AE   ZE   PV

PCM-1

PCM-2

Takt

VD   I   PD   FE  TPF   TG   RF

PLL

FIG 1a (PCM-1)

+S

−S

Bit1   Bit2   Bit3

FIG 1b (PCM-2)

+1

0

Bit1   Bit2   Bit3

0 026 436

FIG 2

0 026 436